# EUROPÄISCHE PATENTANMELDUNG

(11) **EP 1 933 121 A2**
(43) Veröffentlichungstag der Anmeldung: **18.06.2008**
(21) Anmeldenummer: 07022457.1
(22) Anmeldetag: 20.11.2007
(51) Int. Cl.: G01L 1/25, G01L 5/13

(54) **Kraftmessbolzen zur Messung mechanischer Spannungen**

(30) Priorität: 12.12.2006 DE 102006058437
(71) Anmelder: Robert Bosch GmbH, 70184 Stuttgart (DE)
(72) Erfinder: Dreyling, Judith, 71701 Schwieberdingen (DE); Thierbach, Peter, 70634 Ludwigsburg (DE); Bartels, Olaf, Dr., 74321 Bietigheim-Bissingen (DE); Steprath, Werner, 41542 Dormagen (DE)

(57) **Zusammenfassung**

Offenbart ist ein Kraftmessbolzen zur Messung von mechanischen Spannungen, der durch eine einwirkende Kraft verformbar ist und eine Messanordnung aufweist, mit der die Verformung des Kraftmessbolzens erfassbar ist. Erfindungsgemäß hat die Messanordnung zumindest einen Ultraschall-Sender/-Empfänger, wobei der Kraftmessbolzen zumindest abschnittsweise von einem Messstrahl des Ultraschallsenders durchsetzt ist und die Laufzeitänderung des Messstrahls eine Kenngröße der Verformung des Kraftmessbolzens angibt.

## Beschreibung

Die Erfindung betrifft einen Kraftmessbolzen gemäß dem Oberbegriff des Patentanspruchs 1.

Kraftmessbolzen dienen beispielsweise in landwirtschaftlichen Maschinen wie Ackerschleppern und Heuballenpressen, aber auch bei Industriemaschinen wie Gabelstaplern zur Messung von mechanischen Spannungen. Derartige Kraftmessbolzen werden anstelle einfacher Befestigungsbolzen in Gelenkverbindungen eingesetzt und sind mit einer Messanordnung versehen, mittels der die Verformung und damit der mechanische Spannungszustand des Kraftmessbolzens erfassbar ist.

Aus der DE 30 04 592 A1 ist beispielsweise ein Kraftmessbolzen bekannt, der durch eine einwirkende Kraft mechanisch belastet wird und eine Messanordnung aufweist, mit der die Belastung des Kraftmessbolzens erfassbar ist. Bei dieser herkömmlichen Lösung ist eine Messanordnung in einem Innenraum des Kraftmessbolzens angeordnet, die im Wesentlichen aus zwei Sekundärspulen (Empfängerspulen) und einer mittig angeordneten Primärspule (Erregerspule) besteht, die auf einem gemeinsamen Magnetkern angeordnet und über einen Spulenträger in dem Innenraum des Kraftmessbolzens derart gehalten sind, dass diese in Wirkverbindung mit der Innenumfangswandung des Kraftmessbolzens stehen. Der Kraftmessbolzen besteht aus weichmagnetischem Material, wobei sich die Messanordnung den physikalischen Effekt zunutze macht, dass sich die magnetischen Eigenschaften des Kraftmessbolzens in Abhängigkeit von Zug- und Druck-spannungen ändern. An der Primärspule wird hierzu eine Wechselspannung angelegt und an den Sekundärspulen eine von den magnetischen Eigenschaften des Kraftmessbolzens abhängige Messspannung abgegriffen. Die Messspannung ist aufgrund des magnetoelastischen Kraftmessbolzens von den wirkenden Zug- und Druckspannungen abhängig, so dass über diese der mechanische Spannungszustand des Kraftmessbolzens erfassbar ist.

Nachteilig bei derartigen Kraftmessbolzen ist, dass diese aufgrund der Spulenanordnung aufwendig und teuer in der Herstellung sind und die Festigkeit des Kraftmessbolzens durch den zur Aufnahme der Spulenanordnung erforderlichen Innenraum verringert ist. Des Weiteren ist nachteilig, dass bei dieser Lösung gute magnetische Eigenschaften des Kraftmessbolzens erforderlich sind, um ausreichend genaue Messergebnisse zu ermöglichen. Die magnetischen Eigenschaften sind bei den meist verwendeten hochfesten Stählen jedoch oft gering, so dass ein inhomogenes Magnetfeld auftritt und die Messergebnisse vielfach den hohen Anforderungen an die Kraftmessung des Kraftmessbolzens nicht genügen.

Demgegenüber liegt der Erfindung die Aufgabe zugrunde, einen Kraftmessbolzen zu schaffen, bei dem eine verbesserte Kraftermittlung bei minimalem vorrichtungstechnischen Aufwand ermöglicht ist.

Diese Aufgabe wird durch einen Kraftmessbolzen mit den Merkmalen des Patentanspruchs 1 gelöst.

Der erfindungsgemäße Kraftmessbolzen zur Messung von mechanischen Spannungen ist durch eine einwirkende Kraft verformbar und weist eine Messanordnung auf, mit der die Verformung des Kraftmessbolzens erfassbar ist. Erfindungsgemäß ist der Messanordnung zumindest ein Ultraschall-Sender/-Empfänger zugeordnet, wobei der Kraftmessbolzen zumindest abschnittsweise von einem Messstrahl des Ultraschallsenders durchsetzt ist und die Laufzeitänderung des Messstrahls eine Kenngröße der Verformung des Kraftmessbolzens angibt. Bei dieser Lösung vereinfacht sich die Herstellung des Kraftmessbolzens aufgrund der zur Ermittlung der Verformung verwendeten Ultraschalltechnik gegenüber dem Stand der Technik gemäß der DE 30 04 592 A1 erheblich, da keine Spulenanordnung mit Magnetkern und kein Innenraum zu deren Aufnahme in dem Kraftmessbolzen erforderlich ist. Des Weiteren kann das Material des Kraftmessbolzens in Abhängigkeit der geforderten mechanischen Festigkeit gewählt werden.

Gemäß einem besonders bevorzugten Ausführungsbeispiel der Erfindung ist der Kraftmessbolzen von zumindest zwei Messstrahlen des Ultraschallsenders durchsetzt, die jeweils eine Messstrecke ausbilden. Die Messstrecken werden bei einer Belastung des Kraftmessbolzens gegensinnig verformt, wobei die Längendifferenz der Messstrecken ausgewertet wird. Die Messstrecken und die an dem Kraftmessbolzen angreifenden Kräfte sind vorzugsweise in einer gemeinsamen Ebene angeordnet. Beispielsweise wird bei einer auf den Kraftmessbolzen wirkenden Biege- oder Schubkraft eine der Messstrecken verlängert und die andere Messtrecke entsprechend verkürzt. Aufgrund der Längendifferenzmessung der zumindest zwei Messstrecken können Fremdeinflüsse, wie beispielsweise Temperatureinflüsse, im Wesentlichen ausgefiltert werden.

Als besonders vorteilhaft hat es sich erwiesen, wenn die Ultraschallsender und -empfänger synchron und phasengleich betrieben sind, so dass die Phasenverschiebung der beiden Echoschallwellen proportional der Längendifferenz der beiden Messstrecken und somit proportional den zu messenden Spannungen ist. Die Auswertung der Phasenlage hat sich als besonders störsicher erwiesen.

Zur Entfernungsmessung findet bei einem bevorzugten Ausführungsbeispiel der Erfindung ein Ultraschall-Impuls-Echo-Verfahren Anwendung, bei dem der Kraftmessbolzen zumindest eine Reflektionsfläche zur Reflektion des Messstrahls aufweist. Die Eingabe und der Empfang des Messstrahls erfolgt vorzugsweise über ein Piezoelement. Ein derartiger Ultraschall-Sender-Empfänger sendet eine Vielzahl kurzer Schallimpulse pro Sekunde aus und empfängt in den Sendepausen deren Echo, wobei die Laufzeitänderung des Messstrahls eine Kenngröße der Verformung des Kraftmessbolzens angibt.

Die Reflektionsflächen sind bei einer erfindungsgemäßen Ausführung des Kraftmessbolzens als in die Oberfläche eingebrachte Ausnehmungen ausgebildet, die zumindest im Reflektionsbereich des Messstrahls eine ebene Grundfläche aufweisen. Als fertigungstechnisch besonders vorteilhaft hat es sich erwiesen, wenn die Ausnehmungen als Sacklochbohrungen in den Kraftmessbolzen eingebracht sind.

Bei einem alternativen Ausführungsbeispiel findet die Grenzfläche Kraftmessbolzen/Luft oder Kraftmessbolzen/Abdeckkappe als Reflektionsfläche Verwendung. Beispielsweise kann eine im Winkel von 90° zu der Mittelachse des Kraftmessbolzens verlaufende Stirnfläche plan mit hoher Oberflächen- und Formgenauigkeit ausgebildet sein und als Reflektionsfläche dienen. Zum Schutz der Reflektionsfläche kann eine Abdeckkappe vorgesehen sein.

Bei einer Variante der Erfindung, die insbesondere bei einschnittig gelagerten Kraftmessbolzen Verwendung findet, verläuft der zumindest eine Messstrahl parallel zu einer hinsichtlich einer Biegung des Kraftmessbolzens neutralen Faser. Vorzugsweise ist der Kraftmessbolzen von zwei Messstrahlen des Ultraschallsenders durchsetzt, die an einer stirnseitigen Reflektionsfläche des Kraftmessbolzens reflektiert werden und jeweils eine Messstrecke ausbilden. Die Messstrecken werden bei Belastung des Kraftmessbolzens gegensinnig verformt, wobei die Längendifferenz der beiden Messstrecken ausgewertet wird. Insbesondere bei einschnittig gelagerten Kraftmessbolzen kann damit in einfacher weise die Biegeverformung als Kraft-Kennlinie gemessen werden.

Gemäß einer alternativen Ausführung der Erfindung, die insbesondere bei zweischnittig gelagerten Kraftmessbolzen Verwendung findet, verläuft der zumindest eine Messstrahl jeweils zu der Mittelachse des Kraftmessbolzens angestellt. In einer Anordnung, in der die Messstrecken in einem Winkel von etwa 45° zur Mittelachse des Kraftmessbolzens verlaufen, wird ein besonders hoher Signalhub des Messsignals erreicht, da sich durch Scherkräfte hervorgerufene Schubspannungen in einer Längung oder Stauchung einer Diagonallinie des verformten Kraftmessbolzens äußern. Dadurch wird verhindert, dass die Biegeverformung des Kraftmessbolzens eine gekrümmte und hysteresebehaftete Kennlinie ergibt und die Scherverformung nicht auswertbar ist. Der Kraftmessbolzen hat bei dieser Variante vorzugsweise jeweils stirnseitig um 90° zum Messstrahl angestellte Reflektionsflächen und eine Vielzahl von diametral angeordneten Reflektionsflächenpaaren. Durch die angestellt zu der Außenumfangsfläche des Kraftmessbolzens verlaufenden Messstrecken wird die Biegeverformung im Wesentlichen ausgefiltert und die Scherverformung ausgewertet.

Die Signalauswertung des zumindest einen Ultraschallsenders und -empfängers erfolgt vorzugsweise mittels einer dem Kraftmessbolzen zugeordneten Elektronik. Diese ist vorzugsweise in einer stirnseitigen Ausnehmung des Kraftmessbolzens angeordnet. Ein besonders kompakter Kraftmessbolzen wird ermöglicht, wenn die Ultraschallsender und -empfänger zumindest abschnittsweise in eine stirnseitige Vertiefung der Ausnehmung eingesetzt sind. Die Elektronik ermittelt die Laufzeit zwischen Sendung und Echo und bestimmt daraus mit der bekannten Ausbreitungsgeschwindigkeit im Werkstoff des Kraftmessbolzens (bspw. C_{Stahl} = 5920 m/s) die Entfernung vom Sender bis zur Referenz-Reflektionsfläche. Bei synchron und phasengleich betriebenen Ultraschallsendern und -empfängern ermittelt die Elektronik insbesondere die Phasenverschiebung der beiden Echoschallwellen, die proportional der Längendifferenz der beiden Messstrecken und somit proportional den zu messenden Spannungen ist. Die Ausnehmung wird vorzugsweise durch einen Stopfen verschlossen.

Um einen definierten Verformungsbereich des Kraftmessbolzens zu erreichen, ist dieser bei einer bevorzugten Ausführung der Erfindung mit Ringnuten versehen.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine Seitenansicht eines Ackerschleppers mit einem erfindungsgemäßen Kraftmessbolzen;
Figur 2 einen Schnitt entlang der Linie A-A in Figur 1 gemäß einem ersten erfindungsgemäßen Ausführungsbeispiel eines Kraftmessbolzens;
Figur 3 einen Längsschnitt eines Kraftmessbolzens gemäß einem zweiten Ausführungsbeispiel;
Figur 4 einen zu der Darstellung in Figur 2 vergleichbaren Schnitt gemäß eines weiteren erfindungsgemäßen Ausführungsbeispiels eines Kraftmessbolzens und
Figur 5 eine Einzeldarstellung des Kraftmessbolzen aus Figur 4.

Die Erfindung wird im Folgenden anhand eines Kraftmessbolzens für eine Gelenkverbindung eines Ackerschleppers erläutert. Der erfindungsgemäße Kraftmessbolzens ist jedoch keinesfalls auf derartige Verbindungen beschränkt.

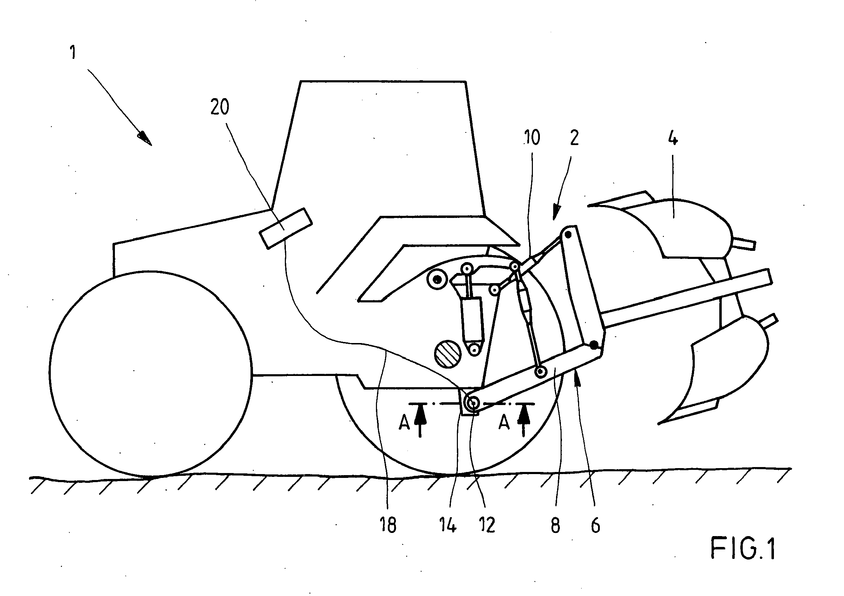

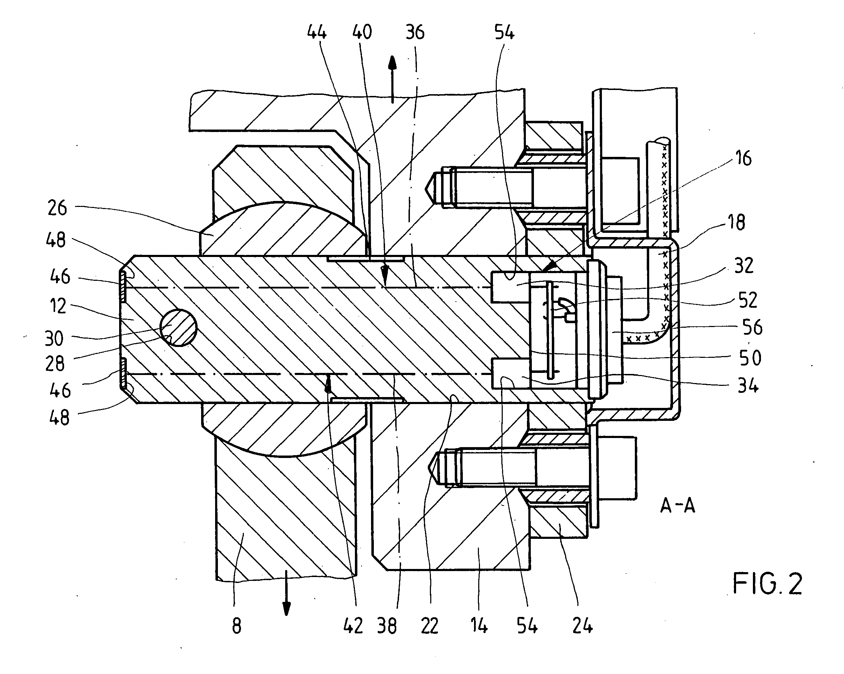

In Figur 1 ist eine schematische Darstellung eines Ackerschleppers 1 gezeigt, an dessen Rückseite ein Hubwerk 2 mit einem Pflug 4 als Anbaugerät gehalten ist. Das Hubwerk 2 stützt sich über eine Lenkeranordnung 6 an der Rückseite des Ackerschleppers 1 ab. Von der Lenkeranordnung 6 ist in Figur 1 ein Unterlenker 8 und ein Oberlenker 10 dargestellt. Der Unterlenker 8 ist mittels eines als Kraftmessbolzen 12 ausgebildeten Gelenkbolzens an einem Befestigungsschenkel 14 des Ackerschleppers 1 befestigt. Der Kraftmessbolzen 12 ist mit einer Kraftmessanordnung 16 (siehe Figur 2) versehen, mittels der dessen Verformung und damit die Druck- oder Zugkräfte am Unterlenker 8 erfasst werden. Über eine Signalleitung 18 wird ein der gemessenen Kraft entsprechendes Signal an ein Steuergerät 20 übermittelt. Das Steuergerät 20 steuert beispielsweise das Hubwerk 2 an, um die Einsenktiefe des Pfluges 4 zu regeln. Der Bereich, in dem der Unterlenker 8 mittels des Kraftmessbolzens 12 an dem Befestigungsschenkel 14 befestigt ist, wird anhand Figur 2 in einem Schnitt entlang der Linie A-A in Figur 1 näher erläutert.

Gemäß Figur 2 ist der Kraftmessbolzen 12 in eine Aufnahmebohrung 22 des Befestigungsschenkels 14 eingesetzt, so dass der Unterlenker 8 einschnittig gelagert ist. Eine mit dem Befestigungsschenkel 14 verschraubte Halteplatte 24 begrenzt hierbei die Einsetztiefe des Kraftmessbolzens 12 und dient als Verdrehsicherung. Über ein Kugelgelenk 26 ist der Unterlenker 8 verschwenkbar auf dem Kraftmessbolzen 12 und über diesen an dem Befestigungsschenkel 14 gehalten. Der Unterlenker 8 ist mittels einem in eine Radialbohrung 28 des Kraftmessbolzens 12 eingesetzten Sicherungsstift 30 auf dem Kraftmessbolzen 12 seitlich gehalten.

Die Messanordnung 16 des erfindungsgemäßen Kraftmessbolzens 12 besteht im Wesentlichen aus zwei Ultraschall-Sendern/-Empfängern 32, 34, wobei der Kraftmessbolzen 12 jeweils von den Messstrahlen 36, 38 der Ultraschallsender 32, 34 durchsetzt ist und die Laufzeitänderung der Messstrahlen 36, 38 eine Kenngröße der Verformung des Kraftmessbolzens 12 angibt. Die Eingabe und der Empfang der Messstrahlen 36, 38 erfolgt über Piezoelemente 32, 34, die jeweils als Ultraschall-Sender und -Empfänger dienen. Bei dieser Lösung vereinfacht sich die Herstellung des Kraftmessbolzens 12 aufgrund der zur Ermittlung der Verformung des Kraftmessbolzens 12 verwendeten Ultraschalltechnik erheblich, da keine Spulenanordnung mit Magnetkern und kein Innenraum zu deren Aufnahme in dem Kraftmessbolzen erforderlich ist. Des Weiteren kann das Material des Kraftmessbolzens 12 in Abhängigkeit der Festigkeitsanforderungen gewählt werden. Die Messstrahlen 36, 38 der Ultraschallsender 32, 34 bilden jeweils eine Messstrecke 40, 42 aus, die bei einer Belastung des Kraftmessbolzens 12 gegensinnig verformt werden, wobei die Längendifferenz der beiden Messstrecken 40, 42 ausgewertet wird. Um einen definierten Verformungsbereich des Kraftmessbolzens 12 zu erreichen, ist dieser im Bereich der Schnittebene mit einer Ringnut 44 versehen. Zur Längenmessung findet ein Ultraschall-Impuls-Echo-Verfahren Anwendung, bei dem der Kraftmessbolzen 12 jeweils eine Reflektionsfläche 46 zur Reflektion der Messstrahlen 36, 38 aufweist. Bei dem dargestellten Ausführungsbeispiel verlaufen die Messstrahlen 36, 38 parallel zu einer hinsichtlich einer Biegung des Kraftmessbolzens 12 neutralen Faser. Die Messstrecken 40, 42 und die an dem Kraftmessbolzen 12 angreifenden schematisch durch Pfeile angedeuteten Kräfte sind in einer gemeinsamen Ebene angeordnet. Aufgrund der Längendifferenzmessung der gegensinnig verformbaren Messstrecken 40, 42 können Fremdeinflüsse, wie beispielsweise Temperatureinflüsse, im Wesentlichen ausgefiltert werden. Insbesondere bei dem dargestellten einschnittig gelagerten Kraftmessbolzen 12 kann damit in einfacher Weise die Biegeverformung als Kraft-Kennlinie gemessen werden. Die Reflektionsflächen 46 sind durch in die Oberfläche des Kraftmessbolzens 12 eingebrachte stirnseitige Ausnehmungen ausgebildet, die zumindest im Reflektionsbereich des jeweiligen Messstrahls 36, 38 eine ebene Grundfläche 48 aufweisen. Als fertigungstechnisch besonders vorteilhaft hat es sich erwiesen, wenn die Ausnehmungen 46 als Sacklochbohrungen in den Kraftmessbolzen 12 eingebracht sind.

Die Signalauswertung der Ultraschallsender und -empfänger 32, 34 erfolgt mittels einer in einer stirnseitigen Ausnehmung 50 des Kraftmessbolzens 12 angeordneten und mit der Signalleitung 18 verbundenen Elektronik 52. Die Ultraschallsender und -empfänger 32, 34 sind jeweils in einer stirnseitigen Vertiefung 54 der Ausnehmung 50 eingesetzt. Die Ausnehmung 50 ist durch einen Stopfen 56 verschlossen, so dass eine kompakte, einfach zu montierende Baueinheit erreicht wird. Die Elektronik 52 ermittelt die Laufzeit zwischen Sendung und Echo der Schallwellen und bestimmt daraus mit der bekannten Ausbreitungsgeschwindigkeit im Werkstoff des Kraftmessbolzens 12 die Entfernung vom Sender bis zur jeweiligen Reflektionsfläche 46. Als besonders vorteilhaft hat es sich erwiesen, wenn die Ultraschallsender und -empfänger 32, 34 synchron und phasengleich betrieben sind, so dass die Phasenverschiebung der beiden Echoschallwellen proportional der Längendifferenz der beiden Messstrecken 40, 42 und somit proportional den zu messenden Spannungen ist. Die Auswertung der Phasenlage hat sich als besonders störsicher erwiesen. Bei synchron und phasengleich betriebenen Ultraschallsendern und -empfängern 32, 34 ermittelt die Elektronik 52 insbesondere die Phasenverschiebung der beiden Echoschallwellen.

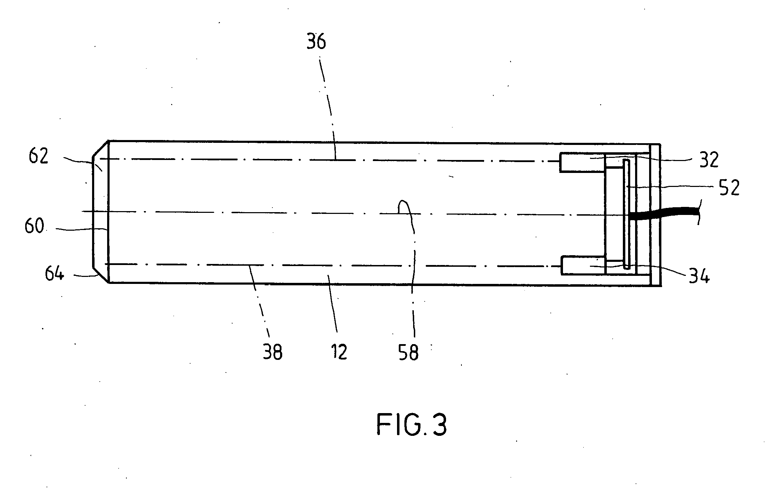

Bei einem in Figur 3 dargestellten alternativen Ausführungsbeispiel eines Kraftmessbolzens 12 findet die Grenzfläche Kraftmessbolzen/Abdeckkappe als Reflektionsfläche Verwendung. Bei diesem Ausführungsbeispiel ist eine im Winkel von 90° zu der Mittelachse 58 des Kraftmessbolzens 12 verlaufende Stirnfläche 60 des Kraftmessbolzens 12 plan mit hoher Formgenauigkeit ausgebildet und dient als Reflektionsfläche. Zum Schutz der Reflektionsfläche 60 ist eine Abdeckkappe 62 an diese angesetzt, die den Kraftmessbolzen 12 stirnseitig abschließt und mit einer Fase 64 zur Erleichterung der Montage des Kraftmessbolzens 12 versehen ist.

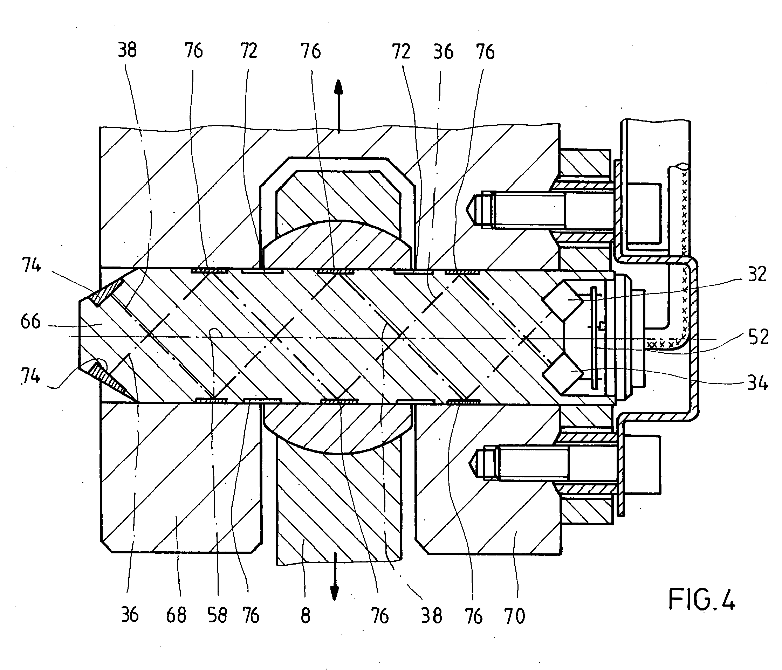

Gemäß Figur 4, die einen zu der Darstellung in Figur 2 vergleichbaren Schnitt gemäß eines weiteren erfindungsgemäßen Ausführungsbeispiels eines Kraftmessbolzens 66 zeigt, das insbesondere bei den dargestellten zweischnittig zwischen zwei Befestigungsschenkeln 68, 70 gelagerten Kraftmessbolzen 66 Verwendung findet, verlaufen die Messstrahlen 36, 38 bei dieser Variante jeweils zu der Mittelachse 58 des Kraftmessbolzens 66 angestellt. Dieser hat zwei stirnseitig um 90° zu den.Messstrahlen 36, 38 angestellte Reflektionsflächen 74 und drei diametral angeordnete Reflektionsflächenpaare 76. Durch die 7-fache Reflektion jedes der Messstrahlen 36, 38 an den Reflektionsflächen 74, 76 wird die Biegeverformung des Kraftmessbolzens 66 weitgehend ausgefiltert und die Scherverformung ausgewertet. In der dargestellten Ausführung, in der die Messstrecken 36, 38 in einem Winkel von etwa 45° zur Mittelachse 58 des Kraftmessbolzens 66 verlaufen, wird ein besonders hoher Signalhub des Messsignals erreicht, da sich durch Scherkräfte hervorgerufene Schubspannungen in einer Längung oder Stauchung einer Diagonallinie des verformten Kraftmessbolzens 66 äußern. Dadurch wird verhindert, dass die Biegeverformung des Kraftmessbolzens 66 eine gekrümmte und hysteresebehaftete Kennlinie ergibt und die Scherverformung nicht auswertbar ist. Um einen definierten Verformungsbereich des Kraftmessbolzens 66 zu erreichen, ist dieser im Bereich der beiden Schnittebenen jeweils mit einer umlaufenden Ringnut 72 versehen. Der Siganlhub wird auch dadurch erhöht, dass die Messstrecken den Kraftmessbolzen 66 mehrfach diagonal durchlaufen.

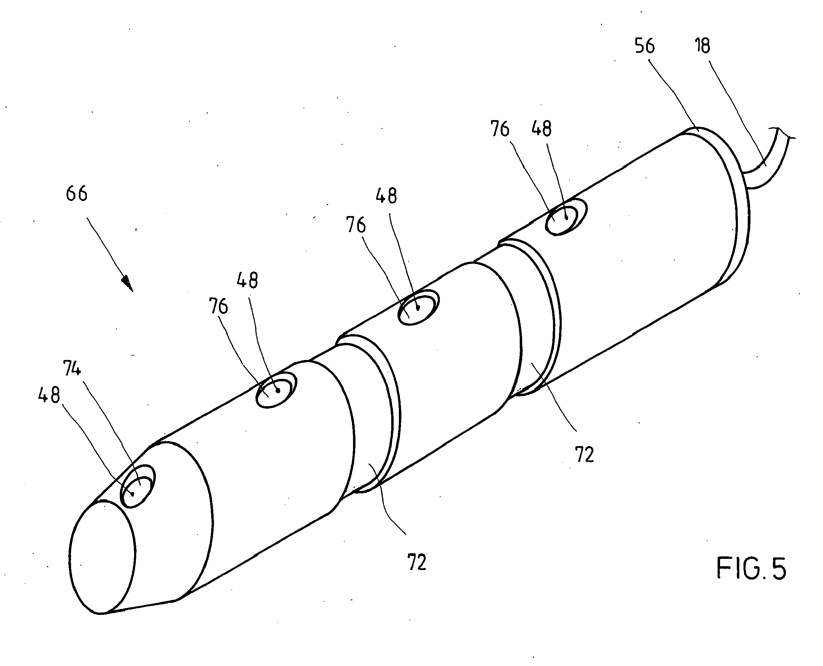

Wie insbesondere Figur 5 zu entnehmen ist, die eine Einzeldarstellung des Kraftmessbolzens 66 aus Figur 4 zeigt, sind die beiden stirnseitigen Reflektionsflächen 74 und die drei diametral angeordneten Reflektionsflächenpaare 76 jeweils durch Sacklochbohrungen ausgebildet. Die Reflektionsflächen 74, 76 weisen zumindest im Reflektionsbereich des jeweiligen Messstrahls 36, 38 (siehe Figur 4) eine ebene Grundfläche 48 auf. Der Kraftmessbolzen 66 wird durch die Signalleitung 18 kontaktiert und durch den Stopfen 56 verschlossen, so dass eine kompakte, einfach zu montierende Baueinheit erreicht wird.

Der erfindungsgemäße Kraftmessbolzen 12, 66 ist nicht auf die beschriebenen Ausführungsbeispiele mit zwei Messstrahlen 36, 38 beschränkt, vielmehr kann dieser von lediglich einem oder mehr als zwei Messstrahlen durchsetzt sein. Diese können entsprechend den zu messenden Spannungen in einer gemeinsamen oder in zueinander angestellten Ebenen verlaufen. Des Weiteren ist es möglich, die genannten Ausführungsbeispiele zu kombinieren, um die Messung von Biege- und Scherspannungen zu optimieren:

Offenbart ist ein Kraftmessbolzen 12, 66 zur Messung von mechanischen Spannungen, der durch eine einwirkende Kraft verformbar ist und eine Messanordnung 16 aufweist, mit der die Verformung des Kraftmessbolzens 12, 66 erfassbar ist. Erfindungsgemäß hat die Messanordnung 16 zumindest einen Ultraschall-Sender/-Empfänger 32, 34, wobei der Kraftmessbolzen 12, 66 zumindest abschnittsweise von einem Messstrahl 36, 38 des Ultraschallsenders 32, 34 durchsetzt ist und die Laufzeitänderung des Messstrahls 36, 38 eine Kenngröße der Verformung des Kraftmessbolzens 12, 66 angibt.

### Bezugszeichenliste

- 1: Ackerschlepper
- 2: Hubwerk
- 4: Pflug
- 6: Lenkeranordnung
- 8: Unterlenker
- 10: Oberlenker
- 12: Kraftmessbolzen
- 14: Befestigungsschenkel
- 16: Kraftmessanordnung
- 18: Signalleitung
- 20: Steuergerät
- 22: Aufnahmebohrung
- 24: Halteplatte
- 26: Kugelgelenk
- 28: Radialbohrung
- 30: Sicherungsstift
- 32: Ultraschall-Sender/-Empfänger
- 34: Ultraschall-Sender/-Empfänger
- 36: Messstrahl
- 38: Messstrahl
- 40: Messstrecke.
- 42: Messstrecke
- 44: Ringnut
- 46: Reflektionsfläche
- 48: Grundfläche
- 50: Ausnehmung
- 52: Elektronik
- 54: Vertiefung
- 56: Stopfen
- 58: Mittelachse
- 60: Stirnfläche
- 62: Abdeckkappe
- 64: Fase
- 66: Kraftmessbolzen
- 68: Befestigungsschenkel
- 70: Befestigungsschenkel
- 72: Ringnut
- 74: Reflektionsfläche
- 76: Reflektionsflächenpaare

## Patentansprüche

1. Kraftmessbolzen zur Messung von mechanischen Spannungen, der durch eine einwirkende Kraft verformbar ist und eine Messanordnung (16) aufweist, mit der die Verformung des Kraftmessbolzens (12, 66) erfassbar ist, **dadurch gekennzeichnet, dass** die Messanordnung (12) zumindest einen Ultraschall-Sender/-Empfänger (32, 34) aufweist, wobei der Kraftmessbolzen (12, 66) zumindest abschnittsweise von einem Messstrahl (36, 38) des Ultraschallsenders (32, 34) durchsetzt ist und die Laufzeitänderung des Messstrahls (36, 38) eine Kenngröße der Verformung des Kraftmessbolzens (12, 66) angibt.

2. Kraftmessbolzen nach Anspruch 1, wobei die Aussendung und der Empfang des Messstrahls (36, 38) über ein Piezoelement (32, 34) erfolgt.

3. Kraftmessbolzen nach Anspruch 1 oder 2, mit zumindest zwei Messstrecken (40, 42), die bei Belastung des Kraftmessbolzens (12, 66) gegensinnig verformbar sind, wobei die Längendifferenz der Messstrecken (40, 42) ausgewertet wird.

4. Kraftmessbolzen nach Anspruch 3, wobei die Ultraschallsender und -empfänger (32, 34) synchron und phasengleich betrieben sind, so dass die Phasenverschiebung der beiden Echoschallwellen proportional der Längendifferenz der beiden Messstrecken (40, 42) und somit proportional den zu messenden Spannungen ist.

5. Kraftmessbolzen nach Anspruch 3 oder 4, wobei die Messstrecken (40, 42) und die an dem Kraftmessbolzen (12, 66) angreifenden Kräfte in einer gemeinsamen Ebene angeordnet sind.

6. Kraftmessbolzen nach einem der vorhergehenden Ansprüche, wobei dieser zumindest eine Reflektionsfläche (46, 60, 74, 76) zur Reflektion des mindestens einen Messstrahls (36, 38) aufweist.

7. Kraftmessbolzen nach Anspruch 6, wobei die Reflektionsflächen (46, 74, 76) als in die Oberfläche des Kraftmessbolzens (12, 66) eingebrachte Ausnehmungen ausgebildet sind, die zumindest im Reflektionsbereich des Messstrahls (36, 38) eine ebene Grundfläche (48) aufweisen.

8. Kraftmessbolzen nach Anspruch 7, wobei die Ausnehmungen (46, 74, 76) als Sacklochbohrungen in den Kraftmessbolzen (12, 66) eingebracht sind.

9. Kraftmessbolzen nach einem der vorhergehenden Ansprüche, wobei der zumindest eine Messstrahl (36, 38) parallel zu einer hinsichtlich einer Biegung des Kraftmessbolzens (12) neutralen Faser verläuft.

10. Kraftmessbolzen nach Anspruch 9, wobei zumindest eine Reflektionsfläche (46, 60) stirnseitig an dem Kraftmessbolzen ausgebildet ist.

11. Kraftmessbolzen nach einem der Ansprüche 1 bis 8, wobei der zumindest eine Messstrahl (36, 38) jeweils zu der Mittelachse (58) des Kraftmessbolzens (66), insbesondere in einem Winkel von etwa 45°, angestellt ist.

12. Kraftmessbolzen nach Anspruch 11, wobei der Kraftmessbolzen (66) stirnseitig um 90° zum Messstrahl (36, 38) angestellte Reflektionsflächen (74) und eine Vielzahl von diametral angeordneten Reflektionsflächenpaaren (76) aufweist.

13. Kraftmessbolzen nach einem der vorhergehenden Ansprüche, wobei der Kraftmessbolzen (12, 66) eine stirnseitige Ausnehmung (50) aufweist, in der eine Elektronik (52) zur Signalauswertung angeordnet ist.

14. Kraftmessbolzen nach Anspruch 13, wobei der zumindest eine Ultraschallsender und -empfänger (32, 34) in eine stirnseitige Vertiefung (54) der Ausnehmung (50) eingesetzt ist.

15. Kraftmessbolzen nach einem der vorhergehenden Ansprüche, wobei der Kraftmessbolzen (12, 66) im Verformungsbereich zumindest eine Ringnut (44, 72) aufweist.
